# EUROPÄISCHE PATENTSCHRIFT

(11) **EP 2 213 353 B1**
(45) Veröffentlichungstag und Bekanntmachung des Hinweises auf die Patenterteilung: **16.05.2012**
(21) Anmeldenummer: 10000643.6
(22) Anmeldetag: 22.01.2010
(51) Int. Cl.: B01D 3/08, B01L 9/04, F16L 27/08, F16L 49/00

(54) **Rotationsantrieb eines Rotationsverdampfers**
Rotatory drive for a rotation evaporator
Système d'entraînement de rotation pour évaporateur rotatif

(30) Priorität: 30.01.2009 DE 102009006746
(43) Veröffentlichungstag der Anmeldung: 04.08.2010
(73) Patentinhaber: Hans Heidolph GmbH & Co. KG, 93309 Kelheim (DE)
(72) Erfinder: Carl, Joachim, 90547 Stein (DE)
(74) Vertreter: Manitz, Finsterwald & Partner GbR

(56) Entgegenhaltungen:
- DE-A1- 1 519 593
- DE-A1- 3 114 449
- DE-A1- 19 710 745
- US-A- 3 034 573

## Beschreibung

Die vorliegende Erfindung betrifft einen Rotationsverdampfer umfassend einen Rotationsantrieb mit einer Nabe und einen Klemmeinsatz mit hülsenartiger Grundform, insbesondere Klemmhülse, zum Verklemmen einer als Glashohlwelle ausgebildeten Dampfdurchführung in der Nabe des Rotationsantriebs, wobei der Klemmeinsatz eine Längsachse und ein erstes und ein zweites axiales Ende aufweist.

Bei einem Rotationsverdampfer handelt es sich um ein Laborgerät, das ein Heizbad und einen in das Heizbad eintauchbaren Verdampferkolben umfasst. Im Betrieb wird ein in dem Heizbad befindliches flüssiges Medium, beispielsweise Wasser oder - für höhere Temperaturen - Öl, geheizt, um damit den in das Heizbad eingetauchten Verdampferkolben zu erwärmen. Hierdurch kann ein in dem Verdampferkolben enthaltenes Flüssigkeitsgemisch erwärmt werden, so dass das jeweilige Destillat, insbesondere Lösungsmittel, verdampft wird. Das verdampfte Destillat strömt dann in einen Kühler des Rotationsverdampfers, um dort zu kondensieren. Anschließend wird das Kondensat in einem Auffangkolben gesammelt. Der im Verdampferkolben zurückbleibende Destillationsrückstand kann weiter aufgearbeitet oder analysiert werden. Häufig ist zusätzlich eine Vakuumpumpe zur Erzeugung eines Vakuums in dem Verdampferkolben und dem Kühler vorgesehen, um die Siedetemperatur zu senken, wodurch die Destillation beschleunigt und die Destillationsrate erhöht werden kann.

Darüber hinaus umfasst ein Rotationsverdampfer einen Rotationsantrieb zum Drehen des Verdampferkolbens in dem Heizbad. Durch die Rotation wird der Verdampferkolben gleichmäßig beheizt und an der beheizten Innenwand des Verdampferkolbens wird ein dünner, eine große Oberfläche aufweisender Flüssigkeitsfilm erzeugt, aus dem das Destillat schnell, effizient und schonend verdampft werden kann.

Um den beispielsweise über eine Schliffverbindung mit der eingangs genannten Dampfdurchführung drehfest verbundenen Rotationsverdampfer in Rotation zu versetzen, wird die als Glashohlwelle ausgebildete Dampfdurchführung, die zum Durchleiten des verdampften Destillats von dem Verdampferkolben an den Kühler dient, von dem Rotationsantrieb rotierend angetrieben. Üblicherweise wird eine derartige Schliffverbindung mit einer Keck-Klemme gesichert. Um den rotierenden Antrieb der Dampfdurchführung zu ermöglichen, kann zwischen einer rotierend antreibbaren Nabe des Rotationsantriebs und der Dampfdurchführung ein Klemmeinsatz mit hülsenartiger Grundform angeordnet sein, der die Dampfdurchführung in der Nabe kraftschlüssig verklemmt.

Kühlerseitig ist die Dampfdurchführung mit einem Kühleranschluss des Kühlers verbunden, wobei zwischen dem Kühleranschluss des stationären Kühlers und dem kühlerseitigen Ende der rotierbaren Dampfdurchführung eine gehäusefeste Dichtung, insbesondere ein Dichtungsring, vorgesehen ist. Eine derartige Dichtung besitzt jedoch lediglich eine begrenzte Betriebslebensdauer.

Die Schrift DE 1519593 beschreibt einen Rotationsverdampfer umfassend einen Rotationsantrieb mit einer Traghülse und einer Spannhülse zum Verklemmten einer als Glashohlwelle ausgebildeten Dampfdurchführung in der Traghülse, wobei die Spannhülse eine Längsachse und ein erstes und ein zweites axiales Ende aufweist an deren Stirnseiten Dichtungsringe anliegen.

Der Erfindung liegt die Aufgabe zugrunde, eine Möglichkeit zu schaffen, die Betriebslebensdauer der vorgenannten Dichtung zu erhöhen.

Diese Aufgabe wird durch einen Rotationsverdampfer mit den Merkmalen des Anspruchs 1 gelöst und insbesondere dadurch, dass der Klemmeinsatz zwei in Längsrichtung voneinander beabstandet angeordnete Klemmabschnitte aufweist, die jeweils einen sich zu dem ersten Ende hin verjün-genden Außenquerschnitt aufweisen und von denen der näher zu dem zweiten Ende angeordnete Klemmabschnitt einen größeren maximalen Außenquerschnitt aufweist.

Bei den Klemmabschnitten handelt es sich um diejenigen Abschnitte des Klemmeinsatzes, die im zusammengesetzten Zustand eines Rotationsverdampfers dafür vorgesehen sind, mit ihren Außenflächen eine kraft- bzw. reibschlüssige Verbindung zu einer Nabe eines Rotationsantriebs des Rotationsverdampfers und mit ihren Innenflächen eine kraft- bzw. reibschlüssige Verbindung zu einer durch den Klemmeinsatz hindurch geführten Dampfdurchführung herzustellen. Die kraft- bzw. reibschlüssige Verbindung des Klemmeinsatzes mit der Nabe des Rotationsverdampfers erfolgt an zu den Klemmabschnitten gegenförmig ausgebildeten Kontaktabschnitten der Nabe. Um die kraft- bzw. reibschlüssige Verbindung herzustellen, wird der in die Nabe zunächst nur lose eingeführte, mit den Klemmabschnitten an den Kontaktabschnitten der Nabe zunächst lediglich anliegende Klemmeinsatz derart mit einer axialen Kraft beaufschlagt, dass die Klemmabschnitte des Klemmeinsatzes an den Kontaktabschnitten radial nach innen abgelenkt werden, wodurch eine Verklemmung der Dampfdurchführung in der Nabe erreicht wird. Der Klemmeinsatz kann beim Einführen der Dampfdurchführung in die Nabe des Rotationsantriebs des Rotationsverdampfers bereits in der Nabe oder aber auch auf der Dampfdurchführung angeordnet sein.

Da zwei Klemmabschnitte vorgesehen sind, die bevorzugt im Bereich der beiden Enden des Klemmeinsatzes angeordnet sind, kann eine gute Zentrierung der Dampfdurchführung innerhalb der Nabe des Rotationsantriebs und über die gesamte Länge der Dampfdurchführung hinweg erreicht werden. Da sich beide Klemmabschnitte zu demselben, ersten Ende des Klemmeinsatzes hin verjüngen und der maximale Außenquerschnitt des näher an dem zweiten Ende angeordneten Klemmabschnitts den maximalen Außenquerschnitt des näher an dem ersten Ende angeordneten Klemmabschnitts übersteigt, kann darüber hinaus eine Zentrierung erreicht werden, ohne dass hierfür weitere Bauteile oder -elemente erforderlich sind. Die hohe Genauigkeit bei der Zentrierung der Dampfdurchführung in der Nabe gewährleistet einen guten Rundlauf der Dampfdurchführung, so dass kaum Radialkräfte auf die vorgenannte Dichtung wirken, wodurch eine hohe Lebensdauer der Dichtung erreicht werden kann.

Mit einem Klemmeinsatz hingegen, der nur einen mit der Nabe des Rotationsantriebs des Rotationsverdampfers zusammenwirkenden Klemmabschnitt aufweist, der in Einführrichtung gesehen an dem vorderen Ende des Klemmeinsatzes angeordnet ist, und dessen hinteres Ende beispielsweise erst durch einen zusätzlich anzubringenden, auf ein entsprechendes Ende der Nabe aufzuschraubenden Spannschraubring zentriert wird, kann ein derart guter Rundlauf der Dampfdurchführung nicht erreicht werden. Eine für eine hohe Lebensdauer der vorgenannten Dichtung ausreichend parallele Ausrichtung der Längsachse der Nabe mit der Längsachse der Dampfdurchführung kann in diesem Fall nicht sichergestellt werden.

Bevorzugt sind die Außenflächen der Klemmabschnitte jeweils kegelstumpfförmig oder konisch ausgebildet. Hierdurch kann eine besonders gute Klemmung der Dampfdurchführung in der Nabe des Rotationsantriebs erreicht werden.

Der Klemmeinsatz kann zumindest im Bereich der Klemmabschnitte jeweils wenigstens eine Durchbrechung oder Ausnehmung oder einen Einschnitt aufweisen, d.h. der jeweilige Klemmabschnitt muss in Umfangsrichtung gesehen keine geschlossene Fläche bzw. keinen geschlossenen Wandbereich aufweisen. Der jeweilige Klemmabschnitt kann mehrere, in Umfangsrichtung voneinander beabstandete Klemmsegmente aufweisen, wodurch ein radiales Zusammendrücken des jeweiligen Klemmabschnitts zum Verklemmen der Dampfdurchführung in der Nabe des Rotationsantriebs erleichtert wird. Die jeweilige Durchbrechung ist insbesondere länglich ausgebildet und erstreckt sich bevorzugt in Längsrichtung des Klemmeinsatzes. Die jeweilige Durchbrechung kann in Längsrichtung gesehen sich über zumindest die gesamte Länge des jeweiligen Klemmabschnitts erstrecken und/oder zu einem jeweiligen der beiden Enden hin offen sein.

Nach einer Ausbildung der Erfindung weisen die Klemmabschnitte jeweils mehrere teilringförmige Klemmsegmente auf, die entlang einer konzentrisch zu der Längsachse verlaufenden Kreisringlinie angeordnet sind. Eine derartige Ausbildung kann insbesondere dann vorliegen, wenn die Klemmabschnitte mit jeweils einer oder mehreren der vorgenannten Durchbrechungen versehen sind.

Der Klemmeinsatz kann mehrere teilhülsenförmige Längsabschnitte aufweisen, die gemeinsam die hülsenartige Grundform des Klemmeinsatzes bilden und über in Umfangsrichtung verlaufende Verbindungsstege fest miteinander verbunden sind. Bevorzugt sind dabei die Verbindungsstege in einem zwischen den Klemmabschnitten angeordneten mittleren Abschnitt des Klemmeinsatzes angeordnet. Insbesondere können die Verbindungsstege in Längsrichtung gesehen auf gleicher Höhe angeordnet sein.

Bevorzugt nimmt die Wandstärke des Klemmeinsatzes im Bereich der Klemmabschnitte jeweils zu dem zweiten Ende hin zu, so dass sich der jeweilige Klemmabschnitt nach Art eines Keils zwischen die Dampfdurchführung und eine entsprechend zulaufenden Innenfläche des jeweils zugeordneten Kontaktabschnitts der Nabe des Rotationsantriebs schieben kann, um die Dampfdurchführung in der Nabe zu verklemmen.

Nach einer weiteren Ausbildung der Erfindung ist die Außenfläche des vorgenannten, in Längsrichtung zwischen den Klemmabschnitten angeordneten mittleren Abschnitts des Klemmeinsatzes mit einer insbesondere in Umfangsrichtung verlaufenden, insbesondere eine zylindrische Grundform aufweisenden Vertiefung versehen. Bevorzugt ist die Nabe des Rotationsantriebs des Rotationsverdampfers in einem Abschnitt, der bei eingesetzter Dampfdurchführung und eingesetztem Klemmeinsatz in Längsrichtung der Nabe gesehen auf Höhe der Vertiefung liegt, derart ausgebildet ist, dass zwischen der Nabe und dem Klemmeinsatz ein Freiraum ausgebildet ist, in den hinein sich der Klemmeinsatz erweitern kann. Durch die Vertiefung wird erreicht, dass sich ein mit Destillat in Verbindung geratener und hierdurch aufgequollener Klemmeinsatz zumindest in dem mittleren Abschnitt nicht zwischen der Nabe des Rotationsantriebs des Rotationsverdampfers und der Dampfdurchführung festsetzt, so dass die Dampfdurchführung auch nach einem Destillatangriff noch zerstörungsfrei aus der Nabe entnommen werden kann.

An der Außenfläche des vorgenannten mittleren Abschnitts des Klemmeinsatzes kann wenigstens ein in Umfangsrichtung verlaufender, radial nach außen vorspringender, insbesondere unterbrochener Ringsteg vorgesehen sein. Insbesondere können zwei derartige Ringstege vorgesehen sein, die in Längsrichtung gesehen die vorgenannte Vertiefung an deren beiden Seiten begrenzen, wobei bevorzugt die Ringstege jeweils einen konstanten und/oder denselben Außenquerschnitt aufweisen. Der jeweilige Ringsteg kann einfach oder mehrfach unterbrochen sein. Eine derartige Unterbrechung kann insbesondere dann vorliegen, wenn der Klemmeinsatz mit einer oder mehreren der vorgenannten Durchbrechungen versehen ist.

Darüber hinaus kann an der Außenfläche des Klemmeinsatzes in Längsrichtung gesehen an das zweite Ende unmittelbar ein in Umfangsrichtung verlaufender, radial nach außen vorspringender, insbesondere unterbrochener äußerer Ringsteg anschließen, wobei bevorzugt an den äußeren Ringsteg unmittelbar der näher zu dem zweiten Ende angeordnete Klemmabschnitt anschließt.

An der Innenfläche des Klemmeinsatzes kann im Bereich der Klemmabschnitte jeweils ein in Umfangsrichtung verlaufender, radial nach innen vorspringender Ringsteg vorgesehen sein, wobei bevorzugt die Ringstege jeweils einen konstanten und/oder denselben Innenquerschnitt aufweisen. Auch dies kann dazu beitragen, dass die Dampfdurchführung auch nach einem Destillatangriff noch zerstörungsfrei aus der Nabe entnommen werden kann.

Nach einer weiteren Ausbildung der Erfindung ist an dem zweiten Ende des Klemmeinsatzes eine ringförmige, sich radial oder senkrecht zu der Längsachse erstreckende Stirnfläche vorgesehen. Ober die Stirnfläche kann der Klemmeinsatz in Längsrichtung mit Kraft beaufschlagt werden, um ein Verklemmen des Klemmeinsatzes zwischen der Nabe des Rotationsantriebs des Rotationsverdampfers und der Dampfdurchführung herbeizuführen.

An der Innenfläche des Klemmeinsatzes kann ein in Umfangsrichtung verlaufender, insbesondere unterbrochener Steg vorgesehen sein, um in eine an der Außenfläche der Dampfdurchführung als entsprechende Gegenform ausgebildete Rille einzugreifen. Der Klemmeinsatz kann einstückig und/oder aus Kunststoff ausgebildet sein. Der näher zu dem ersten Ende angeordnete Klemmabschnitt kann in Längsrichtung gesehen unmittelbar an das erste Ende anschließen. Der Klemmeinsatz kann bezüglich der Längsachse eine mehrzählige Rotationssymmetrie aufweisen.

Die Erfindung betrifft ferner einen Rotationsverdampfer, insbesondere wie er vorstehend beschrieben ist, umfassend einen Rotationsantrieb mit einer Nabe, in die ein Klemmeinsatz mit hülsenartiger Grundform, insbesondere Klemmhülse, einsetzbar ist, zum Verklemmen einer als Glashohlwelle ausgebildeten Dampfdurchführung in der Nabe des Rotationsantriebs, wobei die Nabe eine Längsachse und ein erstes und ein zweites axiales Ende aufweist, und wobei die Nabe zwei in Längsrichtung voneinander beabstandet angeordnete Kontaktabschnitte aufweist, die jeweils einen sich zu dem ersten Ende hin verjüngenden Innenquerschnitt aufweisen und von denen der näher zu dem zweiten Ende angeordnete Kontaktabschnitt einen größeren maximalen Innenquerschnitt aufweist.

Bevorzugt sind die Innenflächen der Kontaktabschnitte jeweils konisch ausgebildet und/oder weist ein zwischen den Kontaktabschnitten der Nabe angeordneter mittlerer Nabenabschnitt einen zylindrischen Innenquerschnitt auf.

Vorzugsweise weist die Nabe an ihren zwischen dem jeweiligen Kontaktabschnitt und dem jeweiligen zugeordneten Ende angeordneten Endabschnitten jeweils einen zylindrischen Innenquerschnitt auf.

Insbesondere sind die Kontaktabschnitte der Nabe als Gegenformen zu den Klemmabschnitten des Klemmeinsatzes ausgebildet und/oder entspricht der gegenseitige Abstand der beiden Kontaktabschnitte dem gegenseitigen Abstand der beiden Klemmabschnitte.

Bevorzugt ist ein Spannorgan zum Verspannen des Klemmeinsatzes zum Verklemmen der Dampfdurchführung in der Nabe des Rotationsantriebs vorgesehen, wobei das Spannorgan an dem Rotationsantriebs befestigbar ist. Insbesondere ist das Spannorgan als Spannschraubring mit einem Innengewinde ausgebildet, wobei der Spannschraubring auf die Nabe des Rotationsantriebs aufschraubbar ist.

Die Erfindung betrifft weiterhin einen Klemmeinsatz mit hülsenartiger Grundform, insbesondere Klemmhülse, zum Verklemmen einer als Glashohlwelle ausgebildeten Dampfdurchführung in einer Nabe eines Rotationsantriebs eines Rotationsverdampfers, mit einer Längsachse und mit einem ersten und einem zweiten axialen Ende, wobei der Klemmeinsatz zwei in Längsrichtung voneinander beabstandet angeordnete Klemmabschnitte aufweist, die jeweils einen sich zu dem ersten Ende hin verjüngenden Außenquerschnitt aufweisen und von denen der näher zu dem zweiten Ende angeordnete Klemmabschnitt einen größeren maximalen Außenquerschnitt aufweist.

Vorteilhafte Weiterbildungen des erfindungsgemäßen Klemmeinsatzes ergeben sich in analoger Weise aus den vorstehend zu dem erfindungsgemäßen Rotationsverdampfer beschriebenen Weiterbildungen.

Vorteilhafte Ausführungsformen der Erfindung sind auch in den Unteransprüchen, der Figurenbeschreibung und der Zeichnung angegeben.

Die Erfindung wird im Folgenden beispielhaft unter Bezugnahme auf die Zeichnung beschrieben. Es zeigen, jeweils in schematischer Darstellung,
- Fig. 1: eine perspektivische Ansicht eines Rotationsverdampfers,
- Fig. 2a: einen Teilquerschnitt entlang einer Längsachse einer Nabe eines Rotationsantriebs eines Rotationsverdampfer mit einge- setzter Klemmhülse und eingesetzter Dampfdurchführung, sowie eine Schliffklemme und einen Verdampferkolben,
- Fig. 2b: einen vergrößerten Ausschnitt aus dem Bereich A aus Fig. 2a,
- Fig. 3: eine perspektivische Ansicht der Klemmhülse aus Fig. 2a,
- Fig. 4: die Nabe aus Fig. 2a in vergrößerter Einzeldarstellung,
- Fig. 5: eine perspektivische Ansicht der Schliffklemme aus Fig. 2a in einer Haltestellung, und
- Fig. 6: eine perspektivische Ansicht der Schliffklemme aus Fig. 2a in einer Freigabestellung.

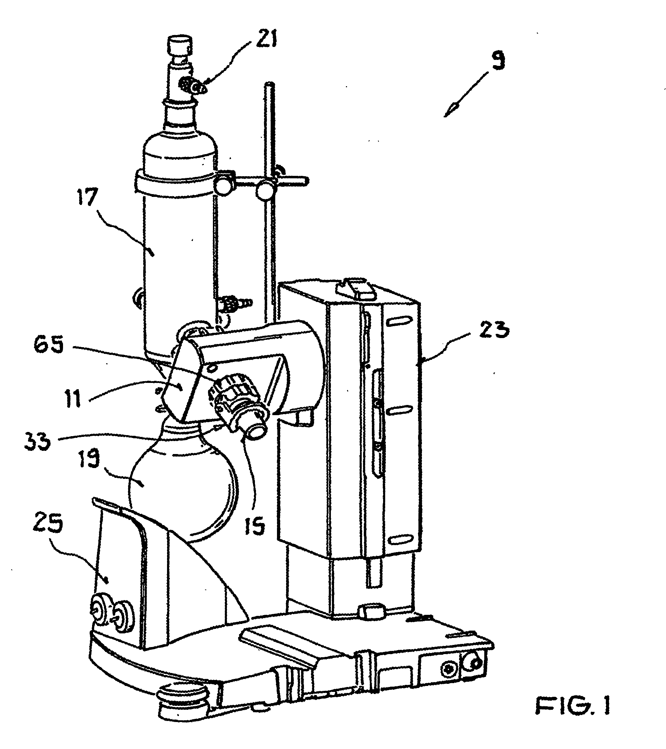

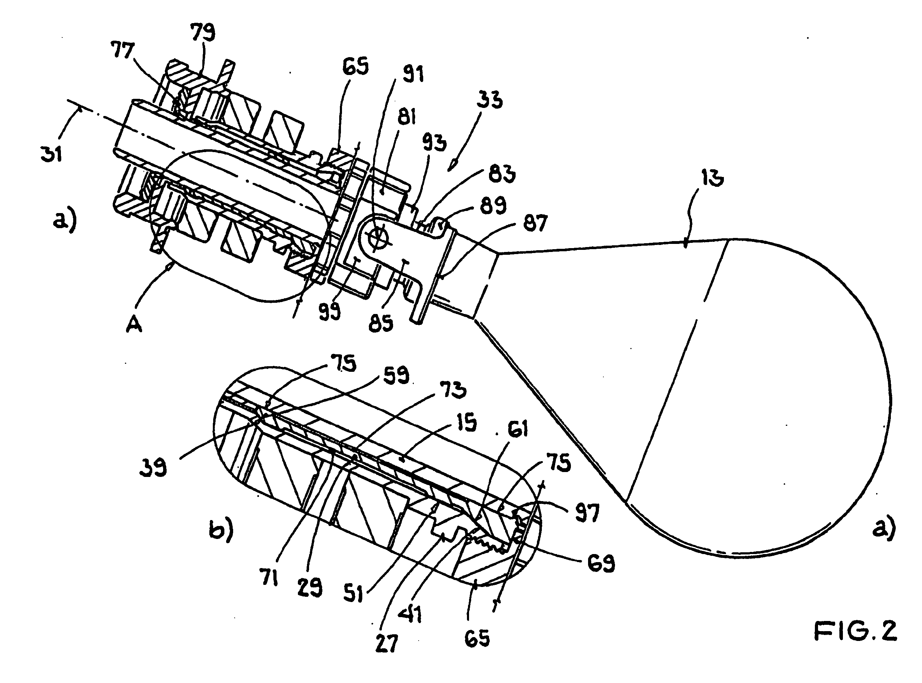

Der in Fig. 1 dargestellte Rotationsverdampfer 9 umfasst einen Rotationsantrieb 11 für einen lediglich in Fig. 2 dargestellten, als Rundkolben oder V-Kolben oder dergleichen ausgebildeten Verdampferkolben 13, der in einem nicht dargestellten Heizbad erwärmt werden kann, um aus einem darin befindlichen Flüssigkeitsgemisch ein Destillat zu verdampfen. Das verdampfte Destillat gelangt dann über eine durch den Rotationsantrieb 11 hindurchgeführte Dampfdurchführung 15, von der in Fig. 1 lediglich ein schräg nach unten aus dem Rotationsantrieb 11 herausstehender Schliffkern erkennbar ist, in einen Kühler 17, um dort zu kondensieren. Das kondensierte Destillat wird dann in einem Auffangkolben 19 gesammelt.

An dem Kühler 17 ist ein Vakuumanschluss 21 vorgesehen, um an den Kühler 17 und den Verdampferkolben 13 ein durch eine Vakuumpumpe erzeugtes Vakuum anzulegen, wodurch die Siedetemperatur für das Destillat gesenkt werden kann. Außerdem umfasst der Rotationsverdampfer 9 einen Lift 23, der den Rotationsantrieb 11 trägt und diesen in vertikaler Richtung verfahren kann, um den Verdampferkolben 13 in das Heizbad abzusenken oder aus diesem anzuheben. Darüber hinaus umfasst der Rotationsverdampfer 9 eine Bedieneinheit 25 zur Steuerung des Heizbades, des Rotationsantriebs 11, der Vakuumpumpe und des Lifts 23.

Die Dampfdurchführung 15 ist durch eine Nabe 27 des Rotationsantriebs 11 hindurchgesteckt (Fig. 2) und über eine Klemmhülse 29, die sich zwischen der Nabe 27 und der Dampfdurchführung 15 befindet, in der Nabe 27 verklemmt, so dass eine Rotation der Nabe 27 des Rotationsantriebs 11 um eine Längsachse 31 der Nabe 27 zu einer entsprechenden Rotation der Klemmhülse 29, der Dampfdurchführung 15 und des mit der Dampfdurchführung 15 drehfest verbunden Verdampferkolbens 13 führt. Bei der Längsachse 31 handelt es sich dabei - im zusammengesetzten Zustand des Rotationsverdampfers 9 - um eine gemeinsame Längsachse 31 der Nabe 27, der Klemmhülse 29, der Dampfdurchführung 15 und des Verdampferkolbens 13. Die Nabe 27, die Klemmhülse 29 und die Dampfdurchführung 15 sind konzentrisch zueinander angeordnet.

Die drehfeste Verbindung zwischen der Dampfdurchführung 15 und dem Verdampferkolben 13 wird durch eine Schliffverbindung gewährleistet, insbesondere Kegelschliffverbindung, bei der die Dampfdurchführung 15 mit ihrer dem Verdampferkolben 13 zugewandten Seite, an der ein Schliffkern ausgebildet ist, in eine an einem Kolbenhals des Verdampferkolbens 13 ausgebildete Schliffhülse eingreift. Zur Sicherung der Schliffverbindung zwischen der Dampfdurchführung 15 und dem Verdampferkolben 13 ist eine Schliffklemme 33 vorgesehen.

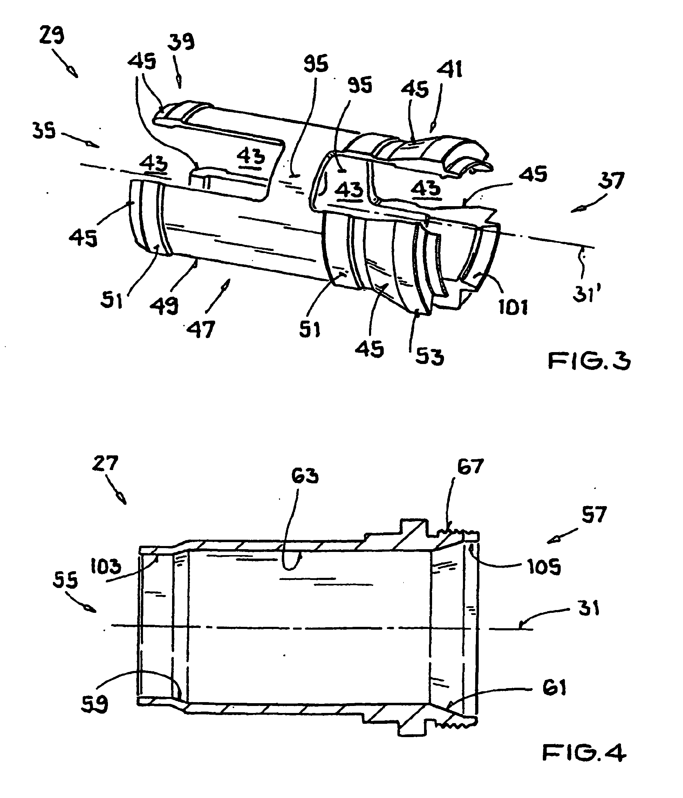

Die eine insbesondere dreizählige Rotationssymmetrie aufweisende, einstückige, aus Kunststoff bestehende Klemmhülse 29 umfasst gemäß Fig. 3 ein vorderes axiales Ende 35 und ein hinteres axiales Ende 37. Die Klemmhülse 29 wird mit ihrem vorderen Ende 35 voraus in die Nabe 27 des Rotationsantriebs 11 des Rotationsverdampfers 9 eingesetzt. Die Klemmhülse 29 weist unmittelbar an das vordere Ende 35 anschließend einen sich mit seinem Außendurchmesser nach hinten konisch erweiternden, vorderen Klemmabschnitt 39 auf. Im hinteren Bereich der Klemmhülse 29 ist ein weiterer derartiger, hinterer Klemmabschnitt 41 vorgesehen, dessen maximaler Außendurchmesser größer ist als der maximale Außendurchmesser des vorderen Klemmabschnitts 39. Da der Innendurchmesser der Klemmhülse 29 im Bereich der Klemmabschnitte 39, 41 jeweils konstant ist, nimmt die Wandstärke der Klemmhülse 29 im Bereich der Klemmabschnitte 39, 41 entsprechend zu.

Die Klemmhülse 29 weist an ihren beiden Enden 35, 37 jeweils drei längliche, zu dem jeweiligen Ende 35, 37 hin offene Einschnitte oder Durchbrechungen 43 auf, wobei auf jeder der beiden Seiten 35, 37 die jeweiligen Durchbrechungen 43 in Umfangsrichtung der Klemmhülse 29 gleichverteilt vorgesehen sind. Jeweils eine Durchbrechung 43 des ersten Endes 35 und eine Durchbrechung des zweiten Endes 37 sind entlang einer zu der Längsachse 31' der Klemmhülse 29 parallelen Geraden angeordnet.

Die jeweilige Durchbrechung 43 erstreckt sich in Längsrichtung 31' der Klemmhülse 29 und von dem jeweiligen Ende 35, 37 kommend über den ersten bzw. zweiten Klemmabschnitt 39, 41 hinweg. Jeder der beiden Klemmabschnitte 39, 41 ist hierdurch in drei teilringförmige Klemmsegmente 45 unterteilt, die entlang einer konzentrisch zu der Längsachse 31' der Klemmhülse 29 verlaufenden Kreislinie angeordnet sind.

Anders ausgedrückt ist die Klemmhülse 29 in drei teilhülsenförmige Längsabschnitte unterteilt, die gemeinsam die hülsenartige Grundform der Klemmhülse 29 bilden und über in Umfangsrichtung verlaufende Verbindungsstege 95 fest aneinander gehaltert sind. Zwischen jeweils zwei der teilhülsenförmigen Längsabschnitte ist jeweils einer der Verbindungsstege 95 angeordnet, wobei die Verbindungsstege 95 in Längsrichtung der Klemmhülse 29 gesehen auf gleicher Höhe angeordnet sind.

Zwischen den beiden Klemmabschnitten 39, 41 ist ein mittlerer Abschnitt 47 der Klemmhülse 29 angeordnet. Der mittlere Abschnitt 47 umfasst eine zylinderförmige Vertiefung 49 und zwei die Vertiefung 49 in Längsrichtung 31' der Klemmhülse 29 begrenzende, in Umfangsrichtung verlaufende, radial nach außen vorspringende Ringstege 51, die jedoch von den Durchbrechungen 43 unterbrochen sind. Die beiden Ringstege 51 besitzen jeweils einen konstanten und denselben Außendurchmesser.

Darüber hinaus ist zwischen dem hinteren Klemmabschnitt 41 und dem hinteren Ende 37 der Klemmhülse 29 ein weiterer derartiger, hinterer Ringsteg 53 vorgesehen. Der Außendurchmesser des hinteren Ringstegs 53 ist dabei konstant und entspricht dem maximalen Außendurchmesser des hinteren Klemmabschnitts 41. Außerdem umfasst die Klemmhülse 29 an ihrer ansonsten zumindest im Wesentlichen zylindrisch ausgebildeten Innenfläche zwei jeweils in Umfangsrichtung verlaufende, radial nach innen vorspringende Ringstege 75.

Wie aus Fig. 4 ersichtlich ist, weist die Nabe 27 ein vorderes axiales Ende 55, ein hinteres axiales Ende 57 sowie zwei in Längsrichtung 31 der Nabe 27 voneinander beabstandet angeordnete Kontaktabschnitte 59, 61 auf, wobei der gegenseitige Abstand der beiden Kontaktabschnitte 59, 61 dem gegenseitigen Abstand der beiden Klemmabschnitte 39, 41 der Klemmhülse 29 entspricht. Die Kontaktabschnitte 59, 61 besitzen jeweils einen sich zu dem hinteren Ende 57 der Nabe 27 konisch erweiternden Innenquerschnitt. Der maximale Innenquerschnitt des hinteren Kontaktabschnitts 61 ist dabei größer als der maximale Innenquerschnitt des vorderen Kontaktabschnitts 59.

Der vordere Kontaktabschnitt 59 der Nabe 27 bildet eine Gegenform zu dem vorderen Klemmabschnitt 39 der Klemmhülse 29, der hintere Kontaktabschnitt 61 der Nabe 27 eine Gegenform zu dem hinteren Klemmabschnitt 41 der Klemmhülse 29. Zwischen den beiden Kontaktabschnitten 59, 61, d.h. an einem mittleren Nabenabschnitt 63, und von dem jeweiligen Kontaktabschnitt 59, 61 zu dem jeweiligen Ende 55, 57 hin, ist die Nabe 27 innenseitig jeweils zylindrisch ausgebildet.

Zum Verklemmen der Dampfdurchführung 15 in der Nabe 27 des Rotationsantriebs 11 des Rotationsverdampfers 9 wird die bereits in die Nabe 27 eingeschobene und mit ihren Klemmabschnitten 39, 41 an den Kontaktabschnitten 59, 61 der Nabe 27 anliegende Klemmhülse 29 axial mit Kraft beaufschlagt. Der vordere bzw. hintere Klemmabschnitt 39, 41 der Klemmhülse 29 läuft dabei auf den vorderen bzw. hinteren konischen Kontaktabschnitt 59, 61 der Nabe 27 auf, wodurch die beiden Klemmabschnitte 39, 41 radial nach innen und damit gegen die Dampfdurchführung 15 gedrückt werden.

Die axiale Kraftbeaufschlagung wird durch einen Spannschraubring 65 bereitgestellt (Fig. 2), der auf eine an dem hinteren Ende 37 der Klemmhülse 29 ausgebildete ringförmige, sich radial zu der Längsachse 31 erstreckende Stirnfläche 69 drückt. Hierzu umfasst der Spannschraubring 65 ein Innengewinde, mit dem der Spannschraubring 65 auf die Nabe 27 aufgeschraubt wird, die mit ihrem hinteren Ende 57, an dem ein dem Innengewinde des Spannschraubrings 65 entsprechendes Außengewinde 67 ausgebildet ist, aus dem Rotationsantrieb 11 hervorsteht. Hierdurch wird Klemmhülse 29 axial verspannt.

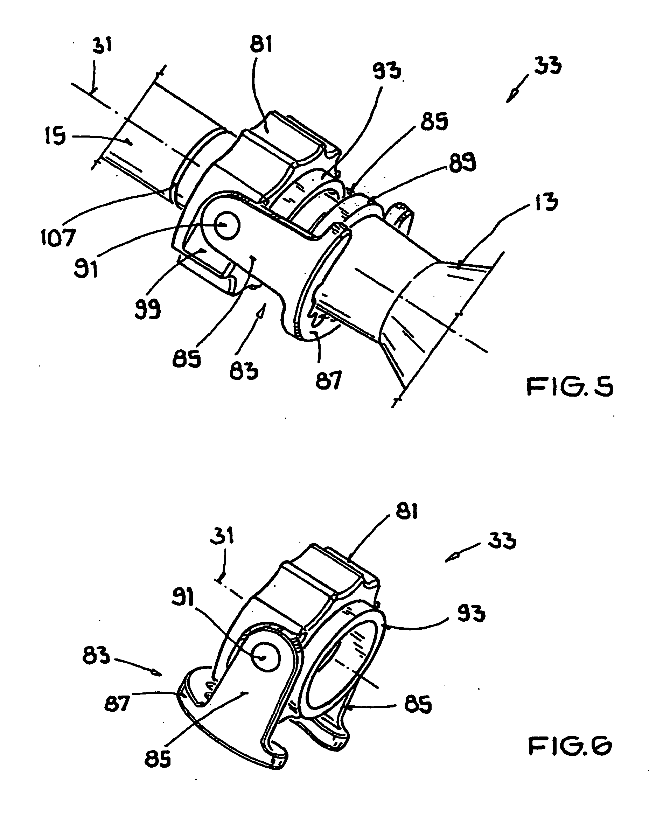

Im zusammengesetzten Zustand ist die Dampfdurchführung 15 durch die Klemmhülse 29 in der Nabe 27 verklemmt. Durch die in der Klemmhülse 29 ausgebildeten Durchbrechungen 43 kann dabei erreicht werden, dass die Klemmabschnitte 39, 41 leichter radial nach innen zusammendrückbar sind. Um eine relative axiale Ausrichtung der Dampfdurchführung 15 zu der Klemmhülse 29 festzulegen, ist an der Innenfläche der Klemmhülse 29 ein umlaufender Steg 97 ausgebildet, der in eine an der Außenfläche der Dampfdurchführung 15 als Gegenform ausgebildete Rille 107 (Fig. 5) eingreift. Von dem zweiten, hinteren Ende 37 des als Klemmhülse 29 ausgebildeten Klemmeinsatzes steht ein insbesondere keilförmig ausgebildeter, insbesondere unterbrochen umlaufender Zentrierabschnitt 101 axial ab, der im eingesetzten Zustand der Klemmhülse 29 in radialer Richtung gesehen zwischen der Dampfdurchführung 15 und einem äußeren Wandabschnitt des Spannschraubrings 65 angeordnet ist.

Zwischen der Nabe 27 und der Klemmhülse 29 ist im mittleren Bereich 47 der Klemmhülse 29 aufgrund der dort umlaufenden Vertiefung 49 ein umlaufender Freiraum 71 ausgebildet (Fig. 2b). Eine als Folge eines Kontakts mit Destillat aufquellende Klemmhülse 29 kann sich in den Freiraum 71 hinein erweitern, ohne dass es hierbei unweigerlich zu einem Festsetzen der Dampfdurchführung 15 in der Nabe 27 kommt. Dies gilt im Übrigen auch für einen Freiraum 73, der in axialer Richtung zwischen den beiden Ringstegen 75 und in radialer Richtung zwischen der Klemmhülse 29 und der Dampfdurchführung 15 ausgebildet ist.

Durch die Klemmhülse 29 mit ihren beiden Klemmabschnitten 39, 41 und der hierzu gegenförmig ausgebildeten Nabe 27 mit den beiden Kontaktabschnitte 59, 61 kann ein gute Zentrierung der Dampfdurchführung 15 in der Nabe 27 des Rotationsantriebs 11 des Rotationsverdampfers 9 und damit ein guter Rundlauf der Dampfdurchführung 15 erreicht werden. Dies ist insbesondere deshalb von Vorteil, da ein nahe zu dem vorderen Klemmabschnitt 39 vorgesehener Dichtungsring 77, der zwischen der im Betrieb rotierenden Dampfdurchführung 15 und einem Kühleranschluss 79 des stationären Kühlers 17 angeordnet ist, dabei kaum belastet wird. Der Dichtungsring 77 besitzt folglich eine hohe Betriebslebensdauer. Darüber hinaus können durch die Klemmhülse 29 die Kontaktflächen zwischen der Dampfdurchführung 15 und der Klemmhülse 29 und zwischen der Klemmhülse 29 und der Nabe 27 minimiert werden.

Die mit der Apparatur lösbar verbindbare Schliffklemme 33 ist in den Fig. 5 und 6 näher dargestellt und umfasst schliffkernseitig, d.h. an ihrer der Dampfdurchführung 15 zugewandten Seite, einen Schraubring 81 und schliffhülsenseitig, d.h. an ihrer dem Verdampferkolben 13 zugewandten Seite, einen Schnappverbinder 83. In Fig. 5 ist die Schliffklemme 33 zusammen mit der Dampfdurchführung 15 und dem Verdampferkolben 13 gezeigt. Der Anschaulichkeit halber ist in Fig. 5 der Spannschraubring 65 weggelassen. In Fig. 6 ist die Schliffklemme 33 in einer Einzeldarstellung gezeigt.

Der Schraubring 81 weist ein Innengewinde auf, mit dem der Schraubring 81 auf ein Außengewinde des vorgenannten Spannschraubrings 65 aufschraubbar ist. Über den Schraubring 81 - insbesondere unter Vermittlung des vorgenannten Spannschraubrings 65 - kann die Schliffklemme 33 an der Nabe 27 des Rotationsantriebs 11 des Rotationsverdampfers 9 verliersicher angebracht bzw. befestigt werden. Um eine Schraubdrehung des Schraubrings 81 zu erleichtern, ist dieser - ebenso wie der Spannschraubring 65 - an seiner Außenfläche mit einer Greifriffelung versehen.

Der zumindest im Wesentlichen bügelförmige Schnappverbinder 83 ist schwenkbar und mittig an dem Schraubring 81 gelagert. Der Schnappverbinder 83 umfasst zwei Schwenkarme 85, die jeweils an einer von zwei bezüglich der Längs- und/oder Drehachse des Schraubrings 81 einander diametral gegenüberliegenden Seiten des Schraubrings 81 angelenkt sind. Darüber hinaus umfasst der Schnappverbinder 83 einen teilringförmigen Halteabschnitt 87. Der Schnappverbinder 83 ist zwischen einer in den Fig. 1, 2 und 5 dargestellten, die Schliffverbindung sichernden Haltestellung und einer in Fig. 6 dargestellten Freigabestellung verschwenkbar.

Der Schraubring 81 und der Schnappverbinder 83 sind jeweils einstückig und aus Kunststoff ausgebildet. Um die Schliffklemme 33 und die verschwenkbare Lagerung des Schnappverbinders 83 an dem Schraubring 81 zu bilden, wird der Schnappverbinder 83 über in den Schwenkarmen 85 ausgebildete Öffnungen auf an den beiden diametral gegenüberliegenden Seiten des Schraubrings 81 ausgebildete Anlenkzapfen 91 eingerastet. Der Schwenkbereich des Schnappverbinders 83 beträgt ca. 90° und ist durch den Öffnungswinkel einer dem jeweiligen Schwenkarm 83 zugeordneten Schwenkvertiefung 99 begrenzt.

Der teilkreisförmige Halteabschnitt 87 ist an derjenigen Seite offen ausgebildet, die bei einem Schwenken des Schnappverbinders 83 von der Freigabestellung in die Haltestellung vorausläuft. Wie aus Fig. 2a erkennbar ist, wird durch den Halteabschnitt 87 eine Ebene definiert, die in der Haltestellung des Schnappverbinders 83 zumindest im Wesentlichen senkrecht zu der Längs- und/oder Drehachse des Schraubrings 81 verläuft.

In der Haltestellung hintergreift der Schnappverbinder 83 mit seinem Haltabschnitt 87 einen an der Schliffhülse des Verdampferkolbens 13 ausgebildeten Bördelrand 89 und schnappt in die Schliffhülse des Verdampferkolbens 13 ein. Um ein Einschnappen zu gewährleisten, erstreckt sich der teilkreisförmige Halteabschnitt 87 über einen Kreisbogen von mehr als 180° und ist zumindest an den beiden Enden des Teilkreises ausreichend federelastisch verformbar ausgebildet. In der Haltestellung wird der Verdampferkolben 13 durch Formschluss von dem Schnappverbinder 83 gehalten. Insbesondere kann der Verdampferkolben 13 auch dann noch von dem Schnappverbinder 83 gehalten werden, wenn der Schnappverbinder 83 nicht mehr vollständig auf dem Spannschraubring 65 aufgeschraubt ist.

In der Freigabestellung gemäß Fig. 6 ist der Schnappverbinder 83 gegenüber der in den Fig. 1, 2 und 5 dargestellten Haltestellung um ca. 90° von der Längs- und/oder Drehachse der Schraubrings 81 weggeschwenkt, um den Kolbenhals und damit den Verdampferkolben 13 freizugeben.

Darüber hinaus weist der Schraubring 81 einen sich in Richtung des Verdampferkolbens 13 erstreckenden Fortsatz auf, der als Abdrückabschnitt 93 ausgebildet ist. Wenn sich die nicht (mehr) gesicherte Schliffverbindung nicht mehr lösen lässt, d.h. wenn der Verdampferkolben 13 nicht mehr von der Dampfdurchführung 15 abgezogen werden kann, dann kann durch Abschrauben der Schliffklemme 33 bzw. des Schraubrings 81 von dem Spannschraubring 65 ein Abdrücken des Verdampferkolbens 13 erreicht werden.

Durch die Schliffklemme 33 kann eine zuverlässige und einfache Sicherung der Schliffverbindung zwischen der Dampfdurchführung 15 und dem Verdampferkolben 13 erreicht werden. Abweichungen des Durchmessers der Schliffhülse und/oder des Kolbenhalses des Verdampferkolbens 13 von einem Normdurchmesser oder einem erwartetem Durchmesser sind tolerierbar und wirken nicht auf die Befestigung des Schraubrings 81 an dem Spannschraubring 65 bzw. dem Rotationsantrieb 11 zurück.

### Bezugszeichenliste

- 9: Rotationsverdampfer
- 11: Rotationsantrieb
- 13: Verdampferkolben
- 15: Dampfdurchführung
- 17: Kühler
- 19: Auffangkolben
- 21: Vakuumanschluss
- 23: Lift
- 25: Bedieneinheit
- 27: Nabe
- 29: Klemmhülse
- 31: Längsachse der Nabe
- 31': Längsachse der Klemmhülse
- 33: Schliffklemme
- 35: vorderes axiales Ende der Klemmhülse
- 37: hinteres axiales Ende der Klemmhülse
- 39: vorderer Klemmabschnitt
- 41: hinterer Klemmabschnitt
- 43: Durchbrechung
- 45: Klemmsegment
- 47: mittlerer Abschnitt der Klemmhülse
- 49: Vertiefung
- 51: Ringsteg
- 53: Ringsteg
- 55: vorderes axiales Ende der Nabe
- 57: hinteres axiales Ende der Nabe
- 59: vorderer Kontaktabschnitt
- 61: hinterer Kontaktabschnitt
- 63: mittlerer Nabenabschnitt
- 65: Spannschraubring
- 67: Außengewinde
- 69: Stirnfläche
- 71: Freiraum
- 73: Freiraum
- 75: Ringsteg
- 77: Dichtungsring
- 79: Kühleranschluss
- 81: Schraubring
- 83: Schnappverbinder
- 85: Schwenkarm
- 87: Halteabschnitt
- 89: Bördelrand
- 91: Anlenkzapfen
- 93: Abdrückabschnitt
- 95: Verbindungssteg
- 97: Steg
- 99: Schwenkvertiefung
- 101: Zentrierabschnitt
- 103: Endabschnitt
- 105: Endabschnitt
- 107: Rille

## Patentansprüche

1. Rotationsverdampfer umfassend einen Rotationsantrieb (11) mit einer Nabe (27) und einen Klemmeinsatz (29) mit hülsenartiger Grundform, insbesondere Klemmhülse, zum Verklemmen einer als Glashohlwelle ausgebildeten Dampfdurchführung (15) in der Nabe (27) des Rotationsantriebs (11), wobei der Klemmeinsatz (29) eine Längsachse (31') und ein erstes und ein zweites axiales Ende (35, 37) aufweist,
**dadurch gekennzeichnet,**
**dass** der Klemmeinsatz (29) zwei in Längsrichtung (31') voneinander beabstandet angeordnete Klemmabschnitte (39, 41) aufweist, die jeweils einen sich zu dem ersten Ende (35) hin verjüngenden Außenquerschnitt aufweisen und von denen der näher zu dem zweiten Ende (37) angeordnete Klemmabschnitt (41) einen größeren maximalen Außenquerschnitt aufweist.

2. Rotationsverdampfer nach Anspruch 1,
**dadurch gekennzeichnet,**
**dass** die Außenflächen der Klemmabschnitte (39, 41) jeweils konisch ausgebildet sind.

3. Rotationsverdampfer nach Anspruch 1 oder 2,
**dadurch gekennzeichnet,**
**dass** der Klemmeinsatz (29) zumindest im Bereich der Klemmabschnitte (39, 41) jeweils wenigstens eine Durchbrechung (43) aufweist, wobei bevorzugt die jeweilige Durchbrechung (43) in Längsrichtung (31') gesehen sich über zumindest die gesamte Länge des jeweiligen Klemmabschnitts (39, 41) erstreckt und/oder zu einem jeweiligen der beiden Enden (35, 37) hin offen ist.

4. Rotationsverdampfer nach zumindest einem der vorstehenden Ansprüche,
**dadurch gekennzeichnet,**
**dass** die Klemmabschnitte (39, 41) jeweils mehrere teilringförmige Klemmsegmente (45) aufweisen, die entlang einer konzentrisch zu der Längsachse (31') verlaufenden Kreisringlinie angeordnet sind.

5. Rotationsverdampfer nach zumindest einem der vorstehenden Ansprüche,
**dadurch gekennzeichnet,**
**dass** der Klemmeinsatz (29) mehrere teilhülsenförmige Längsabschnitte aufweist, die gemeinsam die hülsenartige Grundform des Klemmeinsatzes (29) bilden und über in Umfangsrichtung verlaufende Verbindungsstege (95) fest miteinander verbunden sind, wobei bevorzugt die Verbindungsstege (95) in einem zwischen den Klemmabschnitten (39, 41) angeordneten mittleren Abschnitt (47) des Klemmeinsatzes (29) angeordnet sind.

6. Rotationsverdampfer nach zumindest einem der vorstehenden Ansprüche,
**dadurch gekennzeichnet,**
**dass** die Wandstärke des Klemmeinsatzes (29) im Bereich der Klemmabschnitte (39, 41) jeweils zu dem zweiten Ende (37) hin zunimmt.

7. Rotationsverdampfer nach zumindest einem der vorstehenden Ansprüche,
**dadurch gekennzeichnet,**
**dass** die Außenfläche eines in Längsrichtung (31') zwischen den Klemmabschnitten (39, 41) angeordneten mittleren Abschnitts (47) des Klemmeinsatzes (29) mit wenigstens einer insbesondere in Umfangsrichtung verlaufenden, insbesondere eine zylindrische Grundform aufweisenden Vertiefung (49) versehen ist.

8. Rotationsverdampfer nach zumindest einem der vorstehenden Ansprüche,
**dadurch gekennzeichnet,**
**dass** an der Außenfläche eines in Längsrichtung (31') zwischen den Klemmabschnitten (39, 41) angeordneten mittleren Abschnitts (47) des Klemmeinsatzes (29) wenigstens ein in Umfangsrichtung verlaufender, radial nach außen vorspringender, insbesondere unterbrochener Ringsteg (51) vorgesehen ist, wobei bevorzugt zwei derartige Ringstege (51) vorgesehen sind, die in Längsrichtung (31') gesehen eine Vertiefung (49) an deren beiden Seiten begrenzen.

9. Rotationsverdampfer nach zumindest einem der vorstehenden Ansprüche,
**dadurch gekennzeichnet,**
**dass** an der Außenfläche des Klemmeinsatzes (29) in Längsrichtung (31') gesehen an das zweite Ende (37) unmittelbar ein in Umfangsrichtung verlaufender, radial nach außen vorspringender, insbesondere unterbrochener äußerer Ringsteg (53) anschließt, wobei bevorzugt an den äußeren Ringsteg (53) ummittelbar der näher zu dem zweiten Ende (37) angeordnete Klemmabschnitt (41) anschließt.

10. Rotationsverdampfer nach zumindest einem der vorstehenden Ansprüche,
**dadurch gekennzeichnet,**
**dass** an der Innenfläche des Klemmeinsatzes (29) im Bereich der Klemmabschnitte (39, 41) jeweils ein in Umfangsrichtung verlaufender, radial nach innen vorspringender Ringsteg (75) vorgesehen ist, wobei bevorzugt die Ringstege (75) jeweils einen konstanten und/oder denselben Innenquerschnitt aufweisen.

11. Rotationsverdampfer nach zumindest einem der vorstehenden Ansprüche,
**dadurch gekennzeichnet,**
**dass** an dem zweiten Ende (37) des Klemmeinsatzes (29) eine ringförmige, sich radial zu der Längsachse (31') erstreckende Stirnfläche (69) vorgesehen ist.

12. Rotationsverdampfer, insbesondere nach zumindest einem der vorstehenden Ansprüche, umfassend einen Rotationsantrieb (11) mit einer Nabe (27), in die ein Klemmeinsatz (29) mit hülsenartiger Grundform, insbesondere Klemmhülse, einsetzbar ist, zum Verklemmen einer als Glashohlwelle ausgebildeten Dampfdurchführung (15) in der Nabe (27) des Rotationsantriebs (11), wobei die Nabe (27) eine Längsachse (31) und ein erstes und ein zweites axiales Ende (55, 57) aufweist,
**dadurch gekennzeichnet,**
**dass** die Nabe (27) zwei in Längsrichtung (31) voneinander beabstandet angeordnete Kontaktabschnitte (59, 61) aufweist, die jeweils einen sich zu dem ersten Ende (55) hin verjüngenden Innenquerschnitt aufweisen und von denen der näher zu dem zweiten Ende (57) angeordnete Kontaktabschnitt (61) einen größeren maximalen Innenquerschnitt aufweist.

13. Rotationsverdampfer nach Anspruch 12,
**dadurch gekennzeichnet,**
**dass** die Innenflächen der Kontaktabschnitte (59, 61) jeweils konisch ausgebildet sind und/oder ein zwischen den Kontaktabschnitten (59, 61) der Nabe (27) angeordneter mittlerer Nabenabschnitt (63) einen zylindrischen Innenquerschnitt aufweist und/oder die Nabe (27) an ihren zwischen dem jeweiligen Kontaktabschnitt (39, 41) und dem jeweiligen zugeordneten Ende (55, 57) angeordneten Endabschnitten (103, 105) jeweils einen zylindrischen Innenquerschnitt aufweist.

14. Rotationsverdampfer nach Anspruch 12 oder 13,
**dadurch gekennzeichnet,**
**dass** die Kontaktabschnitte (59, 61) der Nabe (27) als Gegenformen zu den Klemmabschnitten (39, 41) des Klemmeinsatzes (29) ausgebildet sind und/oder der gegenseitige Abstand der beiden Kontaktabschnitte (59, 61) dem gegenseitigen Abstand der beiden Klemmabschnitte (39, 41) entspricht.

15. Rotationsverdampfer nach zumindest einem der vorstehenden Ansprüche,
**dadurch gekennzeichnet,**
**dass** ein Spannorgan (65) zum Verspannen des Klemmeinsatzes (29) zum Verklemmen der Dampfdurchführung (15) in der Nabe (27) des Rotationsantriebs (11) vorgesehen ist, wobei das Spannorgan (33) an dem Rotationsantriebs (11) befestigbar ist, wobei bevorzugt das Spannorgan (65) als Spannschraubring mit einem Innengewinde ausgebildet ist und der Spannschraubring (33) auf die Nabe (27) des Rotationsantriebs (11) aufschraubbar ist.

## Claims

1. A rotary evaporator comprising a rotary drive (11) having a hub (27) and a clamping insert (29) with a sleeve-like basic shape, in particular a clamping sleeve, for the clamping of a steam leadthrough (15) formed as a hollow glass shaft in the hub (27) of the rotary drive (11), wherein the clamping insert (29) has a longitudinal axis (31') and a first and a second axial end (35, 37), **characterized in that**
the clamping insert (29) has two clamping sections (39, 41) which are arranged spaced apart from one another in the longitudinal direction (31') and which each have an outer cross-section tapering toward the first end (35) and of which the clamping section (41) arranged closer to the second end (37) has a larger maximum outer cross-section.

2. A rotary evaporator in accordance with claim 1, **characterized in that** the outer surfaces of the clamping sections (39, 41) are each formed conically.

3. A rotary evaporator in accordance with claim 1 or claim 2, **characterized in that** the clamping insert (29) has at least one respective opening (43) at least in the region of the clamping sections (39, 41), with the respective opening (43) preferably extending, viewed in the longitudinal direction (31'), over at least the total length of the respective clamping section (39, 41) and/or being open toward a respective one of the two ends (35, 37).

4. A rotary evaporator in accordance with at least one of the preceding claims, **characterized in that** the clamping sections (39, 41) each have a plurality of clamping segments (45) of part ring shape which are arranged along a circular ring line extending concentrically to the longitudinal axis (31').

5. A rotary evaporator in accordance with at least one of the preceding claims, **characterized in that** the clamping insert (29) has a plurality of longitudinal sections of part sleeve shape which together form the sleeve-like basic shape of the clamping insert (29) and are fixedly connected to one another via connection webs (95) extending in the peripheral direction, with the connection webs (95) preferably being arranged in a middle section (47) of the clamping insert (29) arranged between the clamping sections (39, 41).

6. A rotary evaporator in accordance with at least one of the preceding claims, **characterized in that** the wall thickness of the clamping insert (29) increases in the region of the clamping sections (39, 41) toward the second end (37) in each case.

7. A rotary evaporator in accordance with at least one of the preceding claims, **characterized in that** the outer surface of a middle section (47) of the clamping insert (29) arranged between the clamping sections (39, 41) in the longitudinal direction (31') is provided with at least one recess (49) which in particular extends in the peripheral direction and in particular has a cylindrical base form.

8. A rotary evaporator in accordance with at least one of the preceding claims, **characterized in that** at least one ring web (51) which extends in the peripheral direction, which projects radially outwardly and which is in particular interrupted is provided at the outer surface of a middle section (47) of the clamping insert (29) arranged between the clamping sections (39, 41) in the longitudinal direction (31'), with two such ring webs (51) preferably being provided which bound, viewed in the longitudinal direction (31'), a recess (49) at its two sides.

9. A rotary evaporator in accordance with at least one of the preceding claims, **characterized in that** an outer ring web (53) which extends in the peripheral direction, which projects radially outwardly and which is in particular interrupted, adjoins the second end (37) directly at the outer surface of the clamping insert (29), viewed in the longitudinal direction (31'), with the clamping section (41) arranged closer to the second end (37) preferably directly adjoining the outer ring web (53).

10. A rotary evaporator in accordance with at least one of the preceding claims, **characterized in that** a respective ring web (75) which extends in the peripheral direction and projects radially inwardly is provided at the inner surface of the clamping insert (29) in the region of the clamping sections (39, 41), with the ring webs (75) preferably each having a constant inner cross-section and/or the same inner cross-section.

11. A rotary evaporator in accordance with at least one of the preceding claims, **characterized in that** a ring-shaped end face (69) extending radially toward the longitudinal axis (31') is provided at the second side (37) of the clamping insert (29).

12. A rotary evaporator, in particular in accordance with at least one of the preceding claims, comprising a rotary drive (11) having a hub (27) into which a clamping insert (29) with a sleeve-like base form, in particular a clamping sleeve, can be inserted for the clamping of a steam leadthrough (15) formed as a hollow glass shaft in the hub (27) of the rotary drive (11), with the hub (27) having a longitudinal axis (31) and a first and a second axial end (55, 57), **characterized in that** the hub (27) has two contact sections (59, 61) which are arranged spaced apart from one another in the longitudinal direction (31) and which each have an inner cross-section tapering toward the first end (55) and of which the contact section (61) arranged closer to the second end (57) has a larger maximum inner cross-section.

13. A rotary evaporator in accordance with claim 12, **characterized in that** the inner surfaces of the contact sections (59, 61) are each made conically and/or a middle hub section (63) arranged between the contact sections (59, 61) of the hub (27) has a cylindrical inner cross-section and/or the hub (27) has a respective cylindrical inner cross-section at its end sections (103, 105) arranged between the respective contact section (39, 41) and the respective associated end (55, 57).

14. A rotary evaporator in accordance with claim 12 or claim 13, **characterized in that** the contact sections (59, 61) of the hub (27) are formed as counter-shapes to the clamping sections (39, 41) of the clamping insert (29) and/or the mutual spacing of the two contact sections (59, 61) corresponds to the mutual spacing of the two clamping sections (39, 41).

15. A rotary evaporator in accordance with at least one of the preceding claims, **characterized in that** a clamping member (65) is provided for the clamping of the clamping insert (29) for the clamping of the steam leadthrough (15) in the hub (27) of the rotary drive (11), with the clamping member (33) being fastenable to the rotary drive (11), with the clamping member (65) preferably being made as a clamping ring nut having an internal thread and the clamping ring nut (33) being able to be screwed onto the hub (27) of the rotary drive (11).

## Revendications

1. Évaporateur rotatif comprenant un entraînement en rotation (11) avec un moyeu (27) et un insert de serrage (29) présentant une forme de base semblable à un manchon, en particulier un manchon de serrage, pour coincer une traversée de vapeur (15), réalisée sous forme d'arbre creux en verre, dans le moyeu (27) de l'entraînement en rotation (11), dans lequel l'insert de serrage (29) comporte un axe longitudinal (31'), et une première et une seconde extrémité axiale (35, 37),
**caractérisé en ce que**
l'insert de serrage (29) comprend deux tronçons de serrage (39, 41) agencés à distance l'un de l'autre en direction longitudinale (31'), qui présentent chacun une section extérieure en rétrécissement en direction de la première extrémité (35) et parmi lesquels le tronçon de serrage (41) agencé plus proche de la seconde extrémité (37) présente une section extérieure maximum plus importante.

2. Évaporateur rotatif selon la revendication 1,
**caractérisé en ce que** les surfaces extérieures des tronçons de serrage (39, 41) sont réalisées respectivement coniques.

3. Évaporateur rotatif selon la revendication 1 ou 2,
**caractérisé en ce que** l'insert de serrage (29) comporte, au moins dans la zone des tronçons de serrage (39, 41), respectivement au moins une traversée (43), et la traversée respective (43) s'étend de préférence, vue en direction longitudinale (31'), au moins sur la longueur totale du tronçon de serrage respectif (39, 41) et/ou est ouverte vers une extrémité respective des deux extrémités (35, 37).

4. Évaporateur rotatif selon l'une au moins des revendications précédentes,
**caractérisé en ce que** les tronçons de serrage (39, 41) comprennent respectivement plusieurs segments de serrage (45) en forme d'anneaux partiels, qui sont agencés le long d'une ligne annulaire circulaire qui s'étend concentriquement à l'axe longitudinal (31').

5. Évaporateur rotatif selon l'une au moins des revendications précédentes,
**caractérisé en ce que** l'insert de serrage (29) comprend plusieurs tronçons longitudinaux en forme de manchons partiels, qui forment conjointement la forme de base analogue à un manchon de l'insert de serrage (29) et qui sont reliés fermement les uns aux autres via des barrettes de liaison (95) s'étendant en direction périphérique, dans lequel les barrettes de liaison (95) sont de préférence agencées dans un tronçon médian (47), de l'insert de serrage (29), agencé entre les tronçons de serrage (39, 41).

6. Évaporateur rotatif selon l'une au moins des revendications précédentes,
**caractérisé en ce que** l'épaisseur de paroi de l'insert de serrage (29), dans la région des tronçons de serrage (39, 41), augmente respectivement vers la seconde extrémité (37).

7. Évaporateur rotatif selon l'une au moins des revendications précédentes,
**caractérisé en ce que** la surface extérieure d'un tronçon médian (47), de l'insert de serrage (29), agencé en direction longitudinale (31') entre les tronçons de serrage (39, 41), est pourvue d'au moins un renfoncement (49) s'étendant en particulier en direction périphérique et présentant en particulier une forme de base cylindrique.

8. Évaporateur rotatif selon l'une au moins des revendications précédentes,
**caractérisé en ce que**, sur la surface extérieure d'un tronçon médian (47), de l'insert de serrage (29), agencé en direction longitudinale (31') entre les tronçons de serrage (39, 41), il est prévu au moins une barrette annulaire (51) s'étendant en direction périphérique, en saillie radialement vers l'extérieur, et en particulier interrompue, et dans lequel il est de préférence prévu deux barrettes annulaires (51) de ce type, qui, vues en direction longitudinale (31'), délimitent un renfoncement (49) sur ses deux côtés.

9. Évaporateur rotatif selon l'une au moins des revendications précédentes,
**caractérisé en ce que**, sur la surface extérieure de l'insert de serrage (29), vue en direction longitudinale (31'), une barrette annulaire extérieure (53), qui s'étend en direction périphérique, qui est en saillie radialement vers l'extérieur, et qui est en particulier interrompue, se raccorde directement à la seconde extrémité (37), et le tronçon de serrage (41) agencé plus proche de la seconde extrémité (37) se raccorde de préférence directement à la barrette annulaire extérieure (53).

10. Évaporateur rotatif selon l'une au moins des revendications précédentes,
**caractérisé en ce que**, sur la surface intérieure de l'insert de serrage (29) et dans la région des tronçons de serrage (39, 41), il est prévu respectivement une barrette annulaire (75) s'étendant en direction périphérique et en saillie radialement vers l'intérieur, et dans lequel les barrettes annulaires (75) présentent de préférence respectivement une section intérieure constante et/ou la même section intérieure.

11. Évaporateur rotatif selon l'une au moins des revendications précédentes,
**caractérisé en ce que**, sur la seconde extrémité (37) de l'insert de serrage (29), il est prévu une face frontale de forme annulaire (69) qui s'étend radialement par rapport à l'axe longitudinal (31').

12. Évaporateur rotatif, en particulier selon l'une au moins des revendications précédentes, comprenant un entraînement en rotation (11) avec un moyeu (27) dans lequel un insert de serrage (29) présentant une forme de base semblable à un manchon, en particulier un manchon de serrage, peut être mis en place, afin de coincer une traversée de vapeur (15), réalisée sous forme d'arbre creux en verre, dans le moyeu (27) de l'entraînement en rotation (11), dans lequel le moyeu (27) présente un axe longitudinal (31), et une première et une seconde extrémité axiale (55, 57),
**caractérisé en ce que** le moyeu (27) comprend deux tronçons de contact (59, 61) agencés à distance l'un de l'autre en direction longitudinale (31), qui présentent chacun une section intérieure en rétrécissement vers la première extrémité (55) et parmi lesquels le tronçon de contact (61) agencé plus proche de la seconde extrémité (57) présente une section intérieure maximale plus élevée.

13. Évaporateur rotatif selon la revendication 12,
**caractérisé en ce que** les surfaces intérieures des tronçons de contact (59, 61) sont réalisées respectivement coniques et/ou un tronçon de moyeu médian (63) agencé entre les tronçons de contact (59, 61) du moyeu (27) présente une section intérieure cylindrique, et/ou le moyeu (27) présente, au niveau de ses tronçons d'extrémité (103, 105) agencés entre le tronçon de contact (39, 41) respectif et l'extrémité (55, 57) respectivement associée, une section intérieure respective cylindrique.

14. Évaporateur rotatif selon la revendication 12 ou 13,
**caractérisé en ce que** les tronçons de contact (59, 61) du moyeu (27) sont réalisés à titre de forme antagoniste vis-à-vis des tronçons de serrage (39, 41) de l'insert de serrage (29), et/ou la distance réciproque des deux tronçons de contact (59, 61) correspond à la distance réciproque des deux tronçons de serrage (39, 41).

15. Évaporateur rotatif selon l'une au moins des revendications précédentes,
**caractérisé en ce qu'**il est prévu un organe de tensionnement (65) pour tensionner l'insert de serrage (29) afin de coincer la traversée de vapeur (15) dans le moyeu (27) de l'entraînement en rotation (11), dans lequel l'organe de tensionnement (33) peut être fixé sur l'entraînement en rotation (11), et l'organe de tensionnement (65) est de préférence réalisé sous forme de bague de tensionnement vissée avec un taraudage, et la bague de tensionnement vissée (33) est susceptible d'être vissée sur le moyeu (27) de l'entraînement en rotation (11).
